(19) Europäisches Patentamt
European Patent Office
Office européen des brevets

(11) Publication number: **0 182 919 B1**

(12) # EUROPEAN PATENT SPECIFICATION

(45) Date of publication of patent specification: **28.12.94**

(51) Int. Cl.5: **C08G 73/12**, C08G 59/40

(21) Application number: **85902649.4**

(22) Date of filing: **28.05.85**

(86) International application number:
**PCT/JP85/00292**

(87) International publication number:
**WO 85/05625 (19.12.85 85/27)**

(54) **THERMOSETTING RESIN COMPOSITION.**

(30) Priority: **28.05.84 JP 108131/84**

(43) Date of publication of application:
**04.06.86 Bulletin 86/23**

(45) Publication of the grant of the patent:
**28.12.94 Bulletin 94/52**

(84) Designated Contracting States:
**DE FR GB IT NL**

(56) References cited:
**DE-A- 3 030 111**
**FR-A- 2 201 313**
**FR-A- 2 355 047**
**JP-A-52 134 694**
**JP-A-58 215 452**

(73) Proprietor: **MITSUI PETROCHEMICAL INDUSTRIES, LTD.**
**2-5, Kasumigaseki 3-chome**
**Chiyoda-ku**
**Tokyo 100 (JP)**

(72) Inventor: **KAMEYAMA, Masao**
**2, Yushudai Higashi 3-chome**
**Ichihara-shi**
**Chiba-ken 299-01 (JP)**
Inventor: **TOMINAGA, Kaoru**
**2, Yushudai Higashi 3-chome**
**Ichihara-shi**
**Chiba-ken 299-01 (JP)**
Inventor: **TAKEDA, Nobuyuki**
**539-108, Hata-machi**
**Chiba-shi**
**Chiba-ken (JP)**
Inventor: **IWATA, Tadao**
**114, Minamioyumi-cho**
**Chiba-shi**
**Cheba-ken 280 (JP)**

(74) Representative: **Goldin, Douglas Michael et al**
**J.A. KEMP & CO.**
**14, South Square**
**Gray's Inn**
**London WC1R 5LX (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

This invention relates to a thermosetting resin composition of the unsaturated bismaleimide compound type, and more specifically to a thermosetting resin composition having excellent handlability and heat resistance and a sufficiently low shrinkage upon curing.

Generally, a thermoset product of an unsaturated bismaleimide compound obtained by reacting an amine with maleic anhydride and thermosetting the product has the advantage that it has excellent heat resistance, and since its curing polymerization reaction, an addition reaction, forms no volatile components during curing and a dense cured product can be formed. However, because the unsaturated bismaleimide compounds have low solubility in general organic solvents, to form a solution of this compound requires the use of high-boiling solvents such as dimethylformamide and N-methylpyrrolidone which are highly polar. To compensate for its low solubility, it is also usual to incorporate an epoxy resin or the like in the unsaturated bismaleimide compound, thereby modifying it. Generally, however, such solutions tend to form precipitates at room temperature, and solventless compositions are too viscous in practical use. This type of thermosetting resin is thus difficult to use in a solventless composition.

DE-A-3030111 discloses a curable resin composition comprising (a) a polyfunctional cyanic acid ester, a cyanic acid ester prepolymer or a prepolymer of a cyanic ester and polyamine (b) an acrylic acid epoxy ester or a prepolymer thereof and (c) a polyfunctional maleimide, a maleimide prepolymer or a prepolymer of a maleimide and a polyamine.

FR-A-2201313 discloses a composition comprising (a) a prepolymer of a bisimide and a polyamine, (b) an epoxy resin and (c) an allyl monomer.

FR-A-2355047 discloses a composition comprising (a) a polyimide, (b) an alkenylphenol and/or an alkenylphenol ether, (c) an allyl group-containing epoxy compound and/or an allyl group-free epoxy compound and (d) an epoxy-curing promoting agent.

It is an object of this invention to provide a solventless thermosetting resin composition of the unsaturated bismaleimide compound type.

Another object of this invention is to provide a thermosetting resin composition having excellent handlability (operability) and heat resistance.

Still another object of this invention is to provide a thermosetting resin composition which can be cured with sufficiently low shrinkage upon curing and is capable of giving a cured product excellent in dimensional stability and appearance.

According to this invention, there is provided a thermosetting resin composition consisting of

(A) the reaction product of a polyamino compound and an unsaturated bismaleimide

(B) a liquid component and

(C) a curing system comprising an epoxy curing agent characterised in that the reaction product (A) is in solution in the liquid component (B)

further characterised in that the liquid component (B) consists of

(i) a vinyl epoxy monomer selected from glycidyl acrylate, glycidyl methacrylate and ethyl glycidyl ether or

(ii) a combination of a vinyl epoxy monomer (i) together with an aliphatic epoxy monomer selected from ethylene glycol diglycidyl ether, propylene glycol diglycidyl ether and pentaerythritol polyglycidyl ether or

(iii) a vinyl epoxy monomer (i) or a combination (ii) together with a styrene type monomer

and further characterised in that the curing system (C) consists of a radical polymerisation initiator and an epoxy curing agent selected from aliphatic amines, acid anhydrides, dicyandiamides, hydrazines, imidazoles and amine complexes of boron trifluoride.

According to one aspect of this invention, there is provided a thermosetting resin composition as described above comprising as an essential ingredient an aliphatic epoxy monomer selected from ethylene glycol diglycidyl ether, propylene glycol diglycidyl ether and pentaerythritol polyglycidyl ether, the composition being obtainable by forming the reaction product (A) by carrying out the reaction in the substantial absence of the vinyl epoxy monomer (i), dissolving the reaction product (A) in the vinyl epoxy monomer (i) as solvent and adding the aliphatic epoxy monomer the epoxy curing agent and the radical polymerisation initiator to the resultant solution.

There are two preferred embodiments of the thermosetting resin composition of this invention, which will be described below in detail.

Embodiment (I)

In this embodiment, the following ingredients are used.

Ingredient (a)

The ingredient (a) is the reaction product (A) of a polyamino compound and an unsaturated bismaleimide compound.

Examples of the polyamino compound are those of the following general formula (I) but are by no means limited to those:

$R(NH_2)_m$  (1)

wherein R represents an organic group having a valence of 2 or more, such as an alkylene, cycloalkylene or arylene group and these groups may be bonded to each other either directly or through another bonding group, and m represents an integer of at least 2.
Specific examples include
4,4'-diaminodicyclohexylmethane,
1,4-diaminocyclohexane,
2,6-diaminopyridine,
m-phenylenediamine,
p-phenylenediamine,
4,4'-diaminodiphenylmethane,
4,4'-diaminodiphenyl ether,
2,2-bis(4-aminophenyl)propane,
benzidine,
4,4'-diaminodiphenylsulfone,
4,4'-diaminodiphenylsulfide,
bis(4-aminophenyl)methylphosphine,
m-xylylenediamine,
1,5-diaminoanaphthalene,
p-xylylenediamine,
hexamethylenediamine,
1,4'-diaminobenzophenone,
2,5-bis(m-aminophenyl)-1,3,4-oxadithiazole,
2,5-bis(p-aminophenyl)-1,3,4-oxadithiazole
4,4'-bis(p-aminophenyl)-2,2'-dithiazole,
3,4'-diaminobenzanilide,
2,2'-bis(m-aminophenyl)-5,5'-dibenzimidazole,
N,N'-bis(p-aminobenzoyl)-4,4'-dimaminodiphenylmethane,
1,3,5-triaminobenzene,
2,4,6-triaminotoluene,
2,4,6-triamino-1,3,5-trimethylbenzene,
1,3,7-triaminonaphthalene,
2,4,4'-triaminodiphenyl,
2,4,6-triaminopyridine,
2,4,4'-triaminodiphenylmethane,
p-aminophenyl-4,4'-diphenylmethane,
tri(4-aminophenyl)methane,
2,4,4'-triaminobenzophenone,
3,5,4'-triaminobenzanilide,
melamine-1,2,4,5-tetraaminobenzene,
2,3,6,7-tetraaminonaphthalene,
3,3',4,4'-tetraaminodiphenyl ether,
3,3',4,4'-tetraaminodiphenylmethane,
3,5-bis(3,4'-diaminophenyl)pyridine, and
compounds of the following general formula

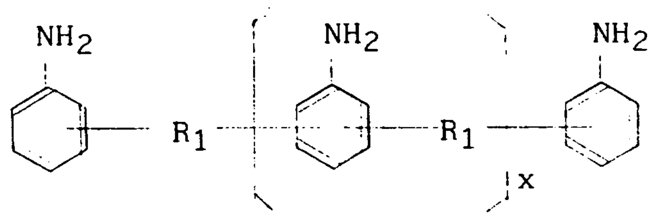

(2)

wherein $R_1$ represents an organic group having 1 to 8 carbon atoms, and x is 0.1 to 2.

Examples of the unsaturated bismaleimide compounds used together with the above polyamino compounds are those of the following general formula

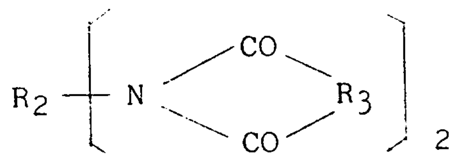

(3)

wherein $R_2$ represents an alkylene, cycloalkylene or arylene group having at least 2 carbon atoms or an organic group composed of a combination of two or more of these groups, and $R_3$ represents a divalent organic group having a carbon-carbon double bond.

Concretely, the following compounds, for example, may be used.

N,N'-phenylenebismaleimide, N,N'-hexamethylene bismaleimide, N,N'-methylene-di-p-phenylene bismaleimide, N,N'-4,4'-benzophenone bismaleimide, N,N'-p-diphenylsulfone bismaleimide, N,N'-(3,3'-dimethyl)-methylene-p-phenylene bismaleimide, N,N'-4,4'-dicyclohexylmethane bismaleimide, N,N'-p-xylylene bismaleimide, N,N'-(3,3'-diethyl)methylene-di-p-phenylene bismaleimide, N,N'-m-tolylene bismaleimide or aniline/formaline reaction product.

These unsaturated bismaleimide compounds may be replaced by monomaleimide compounds such as N-allylmaleimide, N-propylmaleimide, N-hexylmaleimide or N-phenylmaleimide up to about 60% by weight.

Generally, 1 gram-equivalent of the polyamino compound is pre-reacted with above 0.1 to 10 gram-equivalents, preferably about 0.5 to 5 gram-equivalents, of the unsaturated bismaleimide compound. The pre-reaction product may be formed by, for example, mixing them in the absence of the liquid component (B) at a temperature of about 70 to 170 °C for a period of 2 to 15 minutes by using a roll or the like to form a prepolymer. The softening point of the prepolymer is usually adjusted to 60 to 110 °C. The softening point is measured by observing the sample under a microscope while it is heated at a rate of 2 °C/min. As a result of this treatment, the amino groups of the polyamino compound add to the unsaturated bond of the bismaleimide compound by the Michael addition reaction whereby a polyaminobismaleimide may be formed.

The ingredient (a) has the advantage that since the curing polymerization reaction is an addition reaction it forms no volatile component during curing and a dense cured product. In addition, it can dissolve uniformly in the liquid component (B) even at room temperature.

Liquid Component (B)

This acts as a diluent for the ingredient (a) and dissolves it even at room temperature. Accordingly, without using a particular solvent, the curable resin composition is formed as a solution of a low viscosity and exerts an improved workability.

The liquid component (B) may contain a styrene-type monomer such as styrene, alpha-methylstyrene, vinyltoluene or divinylbenxene in amounts which do not substantially impair its solubilizing power at room temperature on the prepolymer. The upper limit of the amount of the styrene monomer is set usually at 0.1 to 10 moles, preferably 0.1 to 3 moles, per mole of the vinyl epoxy monomer (i). The use of the styrene monomer in the aforesaid ratios is desirable to dissolve ingredient (a) to prepare a low viscosity solution and further increases the strength of the cured product.

Curing system (C)

The epoxy curing agent may be any of those known curing agents which do not substantially affect radical polymerization selected from aliphatic amines, acid anhydrides, dicyandiamide, hydrazines, imidazoles and amine complexes of boron trifluoride.

Examples of the radical polymerization initiators are as follows:-

(1) Compounds resulting from bonding of -O-O-H to the secondary or tertiary carbon atom such as in isopropyl hydroperoxide, tert-butyl hydroperoxide, cumyl hydroperoxide and perbenzoic acid.

(2) Compounds resulting from bonding of -O-O- to two secondary or tertiary carbon atoms, such as in diisopropyl peroxide, di-tert-butyl peroxide, and dicumyl peroxide.

(3) Bis-peroxides containing 2 peroxy groups per molecule, such as 2,5-dimethyl-2,5-bis(tert-butyl peroxyl)-hexane, 2,5-dimethyl-2,5-bis(tert-butyl) peroxy)-hexane, 2,5-dimethyl-2,5-bis(tert-butyl peroxy)-hexyne-3 and 1,3-bis(tert-butyl peroxy) isopropylbenzene.

These bisperoxides are especially advantageous in regard to peroxy values.

(4) Organic azo compounds containing at least one -C-N-N- bond in the molecular structure, typified by azobisalkanonitriles such as axobisisobutyronitrile, and azobiscarbonamide.

The thermosetting composition (I) of this invention consists essentially of the reaction product (A), liquid component (B) and curing system (C) described above.

As required, it is possible also to incorporate epoxy curing accelerators such as imidazoles, amine complexes of boron trifluoride, tertiary amines, quaternary ammonium salts or urea compounds, and internal mould releasing agents such as higher fatty acid metal salts in amounts known per se.

Preparation

The resin composition of embodiment (I) generally comprises

1 to 200 parts by weight, especially 5 to 100 parts by weight, per 100 parts by weight of the ingredient (a) of the vinyl epoxy monomer (i) 0.01 to 100 parts by weight, especially 0.05 to 50 parts by weight, per 100 parts by weight of the ingredient (a), of the epoxy curing agent and 0.01 to 10 parts by weight, especially 0.05 to 5 parts by weight, per 100 parts by weight of ingredients (a) and the vinyl epoxy monomer (i) combined, of the radical polymerisation initiator.

The ingredient (a) is prepared as a solution in the liquid component (B).

The preliminary reaction of the ingredient (a) is carried out in the substantial absence of the liquid component (B) at a temperature of about 70 to 170 °C in a reactor to such an extent that the ingredient (a) dissolves in the liquid component (B) even at room temperature and does not precipitate even when the solution is left to stand at room temperature.

The epoxy curing agent and, as required, additives such as an epoxy curing accelerator, are added at room temperature to the resulting uniform solution of ingredient (a) in the liquid component (B), and further the radical polymerisation initiator and, as required, additives such as an internal mould releasing agent or the like are added to give the thermosetting resin composition of embodiment (I).

Embodiment (II)

The thermosetting resin composition of embodiment (II) contains an aliphatic epoxy monomer selected from ethylene glycol diglycidyl ether, propylene glycol diglycidyl ether and pentaerythritol polyglycidyl ether, as an essential ingredient in addition to the vinyl epoxy monomer (i) and the other essential ingredients of the resin composition of embodiment (I).

Because of the incorporation of the aliphatic epoxy monomer, the thermosetting resin composition of embodiment (II) has a markedly reduced shrinkage upon curing over the resin composition of embodiment (I). This brings about the advantage that the dimensional stability and appearance stability of the cured product are not impaired. The shrinkage of the composition upon curing can be markedly reduced as will be shown by an Example given hereinafter.

Preparation

The thermosetting resin composition of embodiment (II), generally comprises

2 to 140 parts by weight, especially 5 to 70 parts by weight, per 100 parts by weight of the ingredient (a), of the vinyl epoxy monomer (i), 4 to 100 parts by weight, especially 8 to 50 parts by weight, per 100 parts by weight of the vinyl epoxy monomer (i), of the aliphatic epoxy monomer, 0.01 to 100 parts by weight,

especially 0.05 to 50 parts by weight, per 100 parts by weight of the ingredient (a), the vinyl epoxy monomer (i) and the aliphatic epoxy monomer combined, of the epoxy curing agent, and 0.01 to 10 parts by weight, especially 0.05 to 5 parts by weight, per 100 parts by weight of ingredient (a), the vinyl epoxy monomer (i) and the epoxy curing agent of the radical polymerization initiator.

In the preparation of this resin composition, component (a) and the vinyl epoxy monomer (i) are used in the form of a mixture as in embodiment (I).

The thermosetting resin composition of embodiment (II) can be prepared by adding the aliphatic epoxy monomer, the epoxy curing agent and, as required, an epoxy curing accelerator to the mixture, and further adding the radical polymerization initiator and, as required, an internal mould releasing agent.

The resulting thermosetting resin compositions (I) and (II) of this invention have the following characteristics and advantages.

(1) Since the unsaturated bismaleimide compound is dissolved as a pre-reacted product with the polyamino compound in the low viscosity liquid component (B) at room temperature, the resulting resin compositions are obtained as a solution of a low viscosity. Hence, these thermosetting resin compositions have excellent workability or operability. When these compositions are impregnated, for instance into fibres, they rapidly thicken. Since this thickening reaction does not induce gelation, the resulting thickened product does not increase in viscosity with time. As a result, moulding materials such as SMC or prepregs which must be in the pre-stage of complete curing have improved storage stability.

The pre-reaction product (prepolymer) is obtained by mixing 1 gram-equivalent of the ingredient (a) with usually 1.5 to 4 gram-equivalents of the vinyl epoxy monomer (i) and reacting them usually at a temperature of 120 to 170 °C for a period of 2 to 15 minutes by using a hot roll. Its softening point is usually adjusted to 60 to 110 °C.

The softening point of the pre-reaction product is measured by observing the sample under a microscope while it is heated at a rate of 2 °C/min.

(2) As a result of using the radical polymerization initiator, the resin compositions of this invention cure within a short time of less than several minutes even at a temperature of not more than 200 °C, and the resulting heat-cured products have excellent mechanical strength and good heat resistance.

(3) Since the prepared resin compositions are liquids having a low viscosity, they have a diversity of applications as molding materials for impregnation, casting or lamination. In particular, they can be easily impregnated into reinforcing materials such as glass fibers, aromatic polyamide fibers, aromatic polyester fibers, carbon fibers, silicon carbide fibers and alumina fibers. When they are completely impregnated by using a press or roll at room temperature through a mold-releasing film, molding materials such as a sheet molding compound (SMC) or a prepreg are obtained. These molding materials can be molded into various articles by reacting them under heat and pressure and then curing the resin component.

(4) Since the thermosetting resin composition of embodiment (II) has a remarkably little shrinkage upon curing, it also offers the advantage that the dimensional stability and appearance characteristics of the cured molded articles are not impaired. The following Examples illustrate the invention more specifically. All parts in these examples are by weight.

Example 1

N,N'-4,4'-diphenylmethane bismaleimide (82 parts) and 18 parts of 4,4'-diaminodiphenylmethane were preliminarily reacted at 130 °C for 15 minutes by a roll to obtain 100 parts of a prepolymer. Sixty parts of the prepolymer and 40 parts of glycidyl methacrylate were mixed in a glass reactor at room temperature for 30 minutes to dissolve the prepolymer. Then, 2 parts of dicyandiamide as an epoxy curing agent, 0.5 part of 2-ethyl-4-methylimidazole as an epoxy curing accelerator, 1 part of dicumyl peroxide as a radical polymerization initiator and 2 parts of zinc stearate as an internal mold releasing agent were mixed to prepare a thermosetting resin composition.

The thermosetting resin composition was impregnated at room temperature into eight layers of chopped glass fiber mat (chop length 50 mm, basis weight 300 g/$m^2$). The impregnated mats were pressed at room temperature to prepare an SMC (thickness about 3 mm) having a glass fiber content of about 60 %. A polyethylene film having a thickness of 50 micrometers as a mold releasing film was used as an overcoat. The SMC was left to stand at room temperature for several days to render it tack-free, and then cured at 160 °C for 3 minutes. It was further cured in an air oven at 200 °C for 24 hours to obtain a plate-like compression-molded article.

The various properties described below of the SMC and the article were measured. The results are shown in Table 1.

Viscosity of the thermosetting resin composition:

Measured at 25°C by a E-type viscometer Impregnability of the resin composition in the chopped glass fibermats: Evaluated visually

Tackness of SMC: Evaluated visually

Drapability of SMC: Evaluated visually

Flexural strength and flexural modulus of elasticity of the molded article: Measured in accordance with JIS K-6911 at 20, 200 and 250°C

Tensile strength of the molded article: Measured at 20°C in accordance with JIS K-6911

Water absorption of the molded article: Measured at 20°C for 24 hours in accordance with JIS K-6911

Storage stability: SMC was stored at 20°C, and the retention of its drapability was evaluated visually.

Shrinkage upon curing: SMC was compression-molded by a mold having a marker for measurement of shrinkage upon curing. The shrinkage was calculated from the difference in size between the SMC molded article and the mold.

Example 2

Example 1 was repeated except that the amounts of the prepolymer and glycidyl methacrylate were changed to 70 and 30 parts, respectively.

Example 3

Example 1 was repeated except that the amounts of the prepolymer and glycidyl methacrylate were changed both to 50 parts.

Example 4

Example 1 was repeated except that allyl glycidyl ether was used instead of glycidyl methacrylate.

Comparative Example 1

Example 1 was repeated except that styrene was used instead of glycidyl methacrylate, and neither the epoxy curing agent nor the epoxy curing accelerator were used.

Comparative Example 2

Example 1 was repeated except that bisphenol A-type epoxy resin (epoxy equivalent 185 to 195, viscosity at 25°C 12000 to 15000 cps) was used instead of glycidyl methacrylate, and the radical polymerization agent was not used.

Comparative Example 3

Example 1 was repeated except that glycidyl methacrylate, the epoxy curing agent and the epoxy curing accelerator were not used.

Table 1 also shows the results of evaluation of the various properties of SMCs and molded articles obtained in Examples 2 to 4 and Comparative Examples 1 to 3.

Example 5

Example 1 was repeated except that a prepreg and a plate-like compression-molded article were produced by using a glass fiber cloth (thickness 0.22 mm, basis weight 300 g/m$^2$) instead of the chopped glass fiber mats. The results of evaluation are shown in Table 2.

Example 6

The thermosetting resin composition obtained in Example 1 was impregnated into a carbon fiber layer (thickness 0.4 mm, basis weight 400 g/m$^2$) in which the fibers were unidirectionally aligned, at room temperature between rolls to prepare a prepreg having a carbon fiber content of about 65 % by weight. Five

plies of such prepreg were heated in an autoclave under a pressure of 3 kgf/cm$^2$ to 150 °C at a rate of 2 °C/min., and thereafter cured at 150 °C for 30 minutes to obtain a plate-like compression-molded article. The properties of the prepreg and the molded article were evaluated as in Example 1, and the results are shown in Table 2.

Example 7

N,N'-4,4'-diphenylmethane bismaleimide (82 parts) and 18 parts of 4,4'-diaminodiphenylmethane were prereacted by heating them at 130 °C for 15 minutes by a roll to obtain 100 parts of a prepolymer.

Fifty-five parts of the prepolymer and 35 parts of glycidyl methacrylate were mixed in a glass reactor at room temperature for 30 minutes to dissolve the prepolymer. The solution was then mixed with 10 parts of ethylene glycol diglycidyl ether as an epoxy compound, 2 parts of dicyandiamide as an epoxy curing agent, 0.5 part of 2-ethyl-4-methylimidazole as an epoxy curing accelerator, 1 part of dicumyl peroxide as a radical polymerization initiator and 2 parts of zinc stearate as an internal mold releasing agent to prepare a thermosetting resin composition.

The resin composition had a viscosity at 25 °C of 6,800 cps as measured by an E-type viscometer.

SMC and a plate-like compression-molded article were produced by using the resulting resin composition in the same way as in Example 1, and their properties are shown in Table 2.

Example 8

SMC and a plate-like compression-molded article were produced in the same way as in Example 1 except that the amount of glycidyl methacrylate was changed to 25 parts, and the amount of ethylene glycol glycidyl ether was changed to 20 parts.

The properties of SMC and the molded article are shown in Table 2.

Example 9

SMC and a plate-like compression-molded article were produced in the same way as in Example 1 except that the amount of glycidyl methacrylate was changed to 15 parts and the amount of ethylene glycol glycidyl ether was changed to 30 parts.

The properties of SMC and the molded products are shown in Table 2.

Table 1

| Formulation | Example 1 | Example 2 | Example 3 | Example 4 | Comparative Example 1 | Comparative Example 2 | Comparative Example 3 |
|---|---|---|---|---|---|---|---|
| Polyamidebismaleimide | 60 | 70 | 50 | 60 | 60 | 60 | 60 |
| Glycidyl methacrylate | 40 | 30 | 50 | - | - | - | - |
| Allyl glycidyl ether | - | - | - | 40 | - | - | - |
| Bisphenol A-type epoxy resin | - | - | - | - | - | 40 | - |
| Methyl methacrylate | - | - | - | - | - | - | - |
| Ethylene glycol diglycidyl ether | - | - | - | - | - | - | - |
| Styrene | - | - | - | - | 40 | - | - |
| Dicyandiamide | 2 | 2 | 2 | 2 | - | 2 | - |
| Dicumyl peroxide | 1 | 1 | 1 | 1 | 1 | - | 1 |
| 2-Ethyl-4-methylimidazole | 0.5 | 0.5 | 0.5 | 0.5 | - | 0.5 | - |
| Zinc stearate | 2 | 2 | 2 | 2 | 2 | 2 | 2 |

Table 1 (continued)

| | Example | | | | Comparative Example | | |
|---|---|---|---|---|---|---|---|
| | 1 | 2 | 3 | 4 | 1 | 2 | 3 |
| Viscosity (mPa.s 25°C) | 28800 | 160000* | 2800 | 2500 | measurement impossible | measurement impossible | measurement impossible |
| Impregnability in fibers | good | slightly good | good | good | poor | poor | poor |
| Tack-free property | good | good | slightly good | good | | | |
| Drapability | good | good | good | good | | | |
| Storage stability (days) | 14 | 14 | 20 | 14 | | | |
| Flexural strength ($kg/mm^2$) | | | | | | | |
| 20°C | 51.0 | 56.2 | 48.4 | 48.8 | | | |
| 200°C | 38.3 | 40.0 | 38.9 | 30.2 | | | |
| 250°C | 34.6 | 34.8 | 29.5 | 24.5 | | | |
| Flexural modulus of elasticity ($kg/mm^2$) | | | | | | | |
| 20°C | 2000 | 2000 | 1900 | 1900 | | | |
| 200°C | 1500 | 1900 | 1600 | 1400 | | | |
| 250°C | 1400 | 1800 | 1400 | 1000 | | | |
| Tensile strength ($kg/mm^2$) | | | | | | | |
| 20°C | 18 | 21 | 18 | 18 | | | |
| 250°C | 15 | 19 | 15 | 13 | | | |
| Water absorption (%) | 0.24 | 0.24 | 0.20 | 0.24 | | | |
| Shrinkage upon curing (%) | 0.20 | 0.16 | 0.27 | 0.22 | | | |

*: In Example 2, the viscosity was measured at 40°C. In Comparative Example 1, the viscosity could not be measured because the composition did not dissolve. In Comparative Example 3, the viscosity could not be measured because the composition was solid.

Table 2

| Formulation | Example 5 | Example 6 | Example 7 | Example 8 | Example 9 |
|---|---|---|---|---|---|
| Polyamidebismaleimide | Same as in Example 1 | Same as in Example 1 | 55 | 55 | 55 |
| Glycidyl methacrylate | " | " | 35 | 25 | 15 |
| Allyl glycidyl ether | " | " | - | - | - |
| Bisphenol A-type epoxy resin | " | " | - | - | - |
| Methyl methacrylate | " | " | - | - | - |
| Ethylene glycol diglycidyl ether | " | " | 10 | 20 | 30 |
| Styrene | " | " | - | - | - |
| Dicyandiamide | " | " | 2 | 2 | 2 |
| Dicumyl peroxide | " | " | 1 | 1 | 1 |
| 2-Ethyl-4-methylimidazole | " | " | 0.5 | 0.5 | 0.5 |
| Zinc stearate | " | " | 2 | 2 | 2 |

Table 2 (continued)

| | Example 5 | Example 6 | Example 7 | Example 8 | Example 9 |
|---|---|---|---|---|---|
| Viscosity (cps, 25°C) | 28800 | 28800 | 6800 | 8900 | 10200 |
| Impregnability in fibers | good | good | good | good | good |
| Tack-free property | good | good | good | good | good |
| Drapability | good | good | good | good | good |
| Storage stability (days) | 14 | 14 | 14 | 14 | 7 |
| Flexural strength ($kg/mm^2$) | | | | | |
| 20°C | 63 | 175 | 51.0 | 50.0 | 49.5 |
| 200°C | 47 | 135 | 34.2 | 29.5 | 20.5 |
| 250°C | 41 | 103 | 32.5 | 20.0 | 18.6 |
| Flexural modulus of elasticity ($kg/mm^2$) | | | | | |
| 20°C | 2300 | 8100 | 2000 | 2000 | 2000 |
| 200°C | 2200 | 7800 | 1400 | 1200 | 1100 |
| 250°C | 2200 | 7500 | 1300 | 900 | 800 |
| Tensile strength ($kg/mm^2$) | | | | | |
| 20°C | 55 | 130 | 18 | 18 | 18 |
| 250°C | 50 | 110 | 15 | 14 | 12 |
| Water absorption (%) | 0.22 | 0.24 | 0.24 | 0.22 | 0.22 |
| Shrinkage upon curing (%) | | | 0.12 | 0.10 | 0.10 |

## Claims

**1.** A thermosetting resin composition consisting essentially of

(A) the reaction product of a polyamino compound and an unsaturated bismaleimide

(B) a liquid component and

(C) a curing system comprising an epoxy curing agent

characterised in that the reaction product (A) is in solution in the liquid component (B) further characterised in that the liquid component (B) consists of

(i) a vinyl epoxy monomer selected from glycidyl acrylate, glycidyl methacrylate and allyl glycidyl ether or

(ii) a combination of a vinyl epoxy monomer (i) together with an aliphatic epoxy monomer selected from ethylene glycol diglycidyl ether, propylene glycol diglycidyl ether and pentaerythritol polyglycidyl ether or

(iii) a vinyl epoxy monomer (i) or a combination (ii) together with a styrene type monomer

and further characterised in that the curing system (C) consists of a radical polymerisation initiator and an epoxy curing agent selected from aliphatic amines, acid anhydrides, dicyandiamide, hydrazines, imidazoles and amine complexes of boron trifluoride.

**2.** A composition according to claim 1 comprising from 1 to 200 parts by weight, per 100 parts by weight of the reaction product (A), of the vinyl epoxy monomer, from 0.01 to 100 parts by weight, per 100 parts by weight of the reaction product (A) and the vinyl epoxy monomer combined, of the epoxy curing agent and from 0.01 to 10 parts by weight, per 100 parts by weight of the reaction product (A) and the vinyl epoxy monomer combined of the radical polymerisation initiator.

**3.** A composition according to claim 1 comprising from 2 to 140 parts by weight, per 100 parts by weight of the reaction product (A), of the vinyl epoxy monomer, from 4 to 10 parts by weight, per 100 parts by weight of the vinyl epoxy monomer, of the aliphatic epoxy monomer, from 10 to 100 parts by weight, per 100 parts by weight of the reaction product (A), the vinyl epoxy monomer and the aliphatic epoxy monomer combined, of the epoxy curing agent and from 0.01 to 10 parts by weight, per 100 parts by weight of the reaction product (A), the vinyl epoxy monomer and the aliphatic epoxy monomer combined, of the radical polymerisation initiator.

**4.** A composition according to any one of claims 1 to 3 wherein, in the reaction product (A), the amount of the unsaturated bismaleimide compound is 0.1 to 10 gram-equivalents per gram-equivalent of the polyamino compound

**5.** A sheet molding compound obtained from a composition according to any one of claims 1 to 4.

**Patentansprüche**

**1.** Eine wärmehärtbare Harzzusammensetzung, bestehend im wesentlichen aus

(A) dem Reaktionsprodukt einer Polyaminoverbindung und eines ungesättigten Bismaleinimids,

(B) einem flüssigen Bestandteil und

(C) einem Härtungssystem, das ein Epoxyhärtungsmittel enthält,

gekennzeichnet dadurch, daß das Reaktionsprodukt (A) in Lösung in dem flüssigen Bestandteil (B) ist, und

darüber hinaus gekennzeichnet dadurch, daß der flüssige Bestandteil (B) besteht aus

(i) einem Vinylepoxymonomer, ausgewählt aus Glycidylacrylat, Glycidylmethacrylat und Allylglycidylether, oder

(ii) einer Kombination eines Vinylepoxymonomers (i) zusammen mit einem aliphatischen Epoxymonomer, ausgewählt aus Ethylenglykol-diglycidylether, Propylenglykol-diglycidylether und Pentaerythritol-polyglycidylether, oder

(iii) einem Vinylepoxymonomer (i) oder einer Kombination (ii) zusammen mit einem styrolartigen Monomer,

und weiterhin gekennzeichnet dadurch, daß das Härtungssystem (C) aus einem radikalischen Polymerisationsinitiator und einem Epoxyhärtungsmittel besteht, ausgewählt aus aliphatischen Aminen, Säureanhydriden, Dicyandiamid, Hydrazinen, Imidazolen und Aminkomplexen des Bortrifluorids.

**2.** Zusammensetzung nach Anspruch 1, enthaltend von 1 bis 200 Gew.-Teile, pro 100 Gew.-Teile des Reaktionsproduktes (A), des Vinylepoxymonomers, von 0,01 bis 100 Gew.-Teile, pro 100 Gew.-Teile des Reaktionsproduktes (A) und des Vinylepoxymonomers zusammen, des Epoxyhärtungsmittels und von 0,01 bis 10 Gew.-Teile, pro 100 Gew.-Teile des Reaktionsproduktes (A) und des Vinylepoxymonomers zusammen, des radikalischen Polymerisationsinitiators.

**3.** Zusammensetzung gemäß Anspruch 1, enthaltend von 2 bis 140 Gew.-Teile, pro 100 Gew.-Teile des Reaktionsproduktes (A), des Vinylepoxymonomers, von 4 bis 10 Gew.-Teile, pro 100 Gew.-Teile des Vinylepoxymonomers, des aliphatischen Epoxymonomers, von 10 bis 100 Gew.-Teile, pro 100 Gew.-Teile des Reaktionsproduktes (A), des Vinylepoxymonomers und des aliphatischen Epoxymonomers

zusammen, des Epoxyhärtungsmittels und von 0,01 bis 10 Gew.-Teile, pro 100 Gew.-Teile des Reaktionsproduktes (A), des Vinylepoxymonomers und des aliphatischen Epoxymonomers zusammen, des radikalischen Polymerisationsinitiators.

**4.** Zusammensetzung nach einem der Ansprüche 1 bis 3, wobei in dem Reaktionsprodukt (A) die Menge der ungesättigten Bismaleinimidverbindung 0,1 bis 10 Grammäquivalente pro Grammäquivalent der Polyaminoverbindung ist.

**5.** Eine flächige Formteil-Masse, erhalten aus einer Zusammensetzung nach einem der Ansprüche 1 bis 4.

**Revendications**

**1.** Composition de résine thermodurcissable constituée essentiellement
(A) du produit de la réaction d'un composé polyaminé avec un bismaléimide insaturé
(B) d'un composant liquide et
(C) d'un système de durcissement comprenant un agent de durcissement des époxydes,
caractérisée en ce que le produit de réaction (A) est en solution dans le composant liquide (B), et caractérisée en outre en ce que le composant liquide (B) est constitué
(i) d'un monomère époxy-vinylique choisi parmi l'acrylate de glycidyle, le méthacrylate de glycidyle et l'oxyde d'allyle et de glycidyle, ou
(ii) d'une combinaison d'un monomère époxy-vinylique (i) ensemble avec un monomère époxy-aliphatique choisi parmi l'éther diglycidylique d'éthylèneglycol, l'éther diglycidylique de propylèneglycol et l'éther polyglycidylique de pentaérythrol, ou
(iii) d'un monomère époxy-vinylique (i) ou d'une combinaison (ii) ensemble avec un monomère de type styrène
et caractérisée en outre en ce que le système de durcissement (C) est constitué d'un amorceur de polymérisation radicalaire et d'un agent de durcissement des époxydes choisi parmi les amines aliphatiques, les anhydrides d'acide, le dicyandiamide, les hydrazines, les imidazoles et les complexes d'amines et de trifluorure de bore.

**2.** Composition conforme à la revendication 1 comprenant de 1 à 200 parties en poids du monomère époxy-vinylique pour 100 parties en poids de produit de réaction (A), de 0,01 à 100 parties en poids d'agent de durcissement des époxydes pour 100 parties en poids de la somme du produit de réaction (A) et du monomère époxy-vinylique, et de 0,01 à 10 parties en poids de l'amorceur de polymérisation radicalaire pour 100 parties en poids de la somme du produit de réaction (A) et du monomère époxy-vinylique.

**3.** Composition conforme à la revendication 1 comprenant de 2 à 140 parties en poids du monomère époxy-vinylique pour 100 parties en poids de produit de réaction (A), de 4 à 10 parties en poids de monomère époxy-aliphatique pour 100 parties en poids de monomère époxy-vinylique, de 10 à 100 parties en poids d'agent de durcissement des époxydes pour 100 parties en poids de la somme du produit de réaction (A), du monomère époxy-vinylique et du monomère époxy-aliphatique, et de 0,01 à 10 parties en poids de l'amorceur de polymérisation radicalaire pour 100 parties en poids de la somme du produit de réaction (A), du monomère époxy-aliphatique et du monomère époxy-vinylique.

**4.** Composition conforme à une quelconque des revendications 1 à 3 dans laquelle, dans le produit de réaction (A), la quantité du bismaléimide insaturé est comprise entre 0,1 et 10 équivalents-grammes du composé polyaminé.

**5.** Composé de moulage de feuilles obtenu à partir d'une composition conforme à une quelconque des revendications 1 à 4.